# EUROPEAN PATENT APPLICATION

(11) **EP 4 794 341 A1**
(43) Date of publication of application: **19.08.2026**
(21) Application number: 25768622.0
(22) Date of filing: 05.03.2025
(51) Int. Cl.: H04N 21/4402, H04N 21/44, H04N 21/854, G06N 3/0455, G06N 3/0464, G06N 3/0475, G06T 3/18, G06T 11/40

(54) **ELECTRONIC DEVICE AND OPERATING METHOD THEREOF**

(30) Priority: 06.03.2024 KR 20240032184; 06.12.2024 KR 20240180225
(71) Applicant: Samsung Electronics Co., Ltd., Suwon-si, Gyeonggi-do 16677 (KR)
(72) Inventor: CHOI, Honggyu, Suwon-si, Gyeonggi-do 16677 (KR); KANG, Soomin, Suwon-si, Gyeonggi-do 16677 (KR); AHN, Iljun, Suwon-si, Gyeonggi-do 16677 (KR)
(74) Representative: Appleyard Lees IP LLP
(86) International application number: PCT/KR2025/002919
(87) International publication number: WO 2025/188066

(57) **Abstract**

An electronic device configured to convert a still image into a video, includes: memory in which one or more instructions are stored; and at least one processor, wherein the one or more instructions, when executed by the at least one processor individually or collectively, cause the electronic device to: obtain flow information about a first image, obtain a plurality of transformation images obtained by transforming the first image, based on the flow information about the first image, obtain residual information about the plurality of transformation images, based on the plurality of transformation images and the first image, and generate a plurality of frame images, based on the plurality of transformation images and the residual information about the plurality of transformation images.

## Description

### TECHNICAL FIELD

The disclosure relates to an electronic device for converting a still image into a video and an operating method of the electronic device.

### BACKGROUND ART

As data traffic increases exponentially with the development of computer technology, artificial intelligence has become an important trend for leading future innovation. Artificial intelligence mimics human thinking, and thus, is applicable to virtually all industries limitlessly. Representative technologies of artificial intelligence include pattern recognition, machine learning, expert systems, neural networks, and natural language processing.

A neural network models the characteristics of human biological nerve cells by using mathematical expressions, and mimics a human's learning ability. The neural network is able to generate a mapping between input data and output data. The neural network's ability to generate such mapping may be expressed as the learning ability of the neural network. Also, the neural network has a generalization ability to generate correct output data with respect to input data that has not been used for learning, based on a learning result.

The neural network may be used for image processing, and in particular, image processing for generating an image, removing noise or artifacts of an image, or increasing a resolution of an image may be performed by using, for example, a deep neural network (DNN).

### DISCLOSURE OF INVENTION

### SOLUTION TO PROBLEM

An electronic device according to an embodiment of the disclosure may convert a still image into a video.

The electronic device according to an embodiment of the disclosure may include memory in which one or more instructions are stored and at least one processor including a processing circuit.

The one or more instructions, when executed by the at least one processor according to an embodiment of the disclosure individually or collectively, may cause the electronic device to obtain flow information about a first image.

The one or more instructions, when executed by the at least one processor according to an embodiment of the disclosure individually or collectively, may cause the electronic device to obtain a plurality of transformation images obtained by transforming the first image, based on the flow information.

The one or more instructions, when executed by the at least one processor according to an embodiment of the disclosure individually or collectively, may cause the electronic device to obtain residual information about the plurality of transformation images based on the plurality of transformation images and the first image.

The one or more instructions, when executed by the at least one processor according to an embodiment of the disclosure individually or collectively, may cause the electronic device to generate a plurality of frame images based on the plurality of transformation images and the residual information.

The operating method of the electronic device according to an embodiment of the disclosure may include obtaining flow information about a first image.

The operating method of the electronic device according to an embodiment of the disclosure may include obtaining a plurality of transformation images obtained by transforming the first image, based on the flow information.

The operating method of the electronic device according to an embodiment of the disclosure may include obtaining residual information about the plurality of transformation images based on the plurality of transformation images and the first image.

The operating method of the electronic device according to an embodiment of the disclosure may include generating a plurality of frame images based on the plurality of transformation images and the residual information.

### BRIEF DESCRIPTION OF DRAWINGS

The above and other aspects, features, and advantages of certain embodiments of the disclosure will be more apparent from the following description taken in conjunction with the accompanying drawings, in which:
FIG. 1 illustrates an operation in which an electronic device converts a still image into a video, according to an embodiment of the disclosure;
FIG. 2 illustrates a configuration of an image processing module, according to an embodiment of the disclosure;
FIG. 3 illustrates a encoder included in a feature extraction unit, according to an embodiment of the disclosure;
FIG. 4 illustrates a residual block, according to an embodiment of the disclosure;
FIG. 5 illustrates a flow generation unit, according to an embodiment of the disclosure;
FIG. 6 illustrates an attention block, according to an embodiment of the disclosure;
FIG. 7 illustrates a down block, according to an embodiment of the disclosure;
FIG. 8 illustrates a spatial attention block, according to an embodiment of the disclosure;
FIG. 9 illustrates an up block, according to an embodiment of the disclosure;
FIG. 10 illustrates a feature transformation unit and a feature decoding unit, according to an embodiment of the disclosure;
FIG. 11 illustrates a residual generation unit, according to an embodiment of the disclosure;
FIG. 12 illustrates a residual synthesis unit, according to an embodiment of the disclosure;
FIG. 13 illustrates an operating method of an electronic device, according to an embodiment of the disclosure;
FIG. 14 illustrates an operation in which an electronic device converts a still image into a video, according to an embodiment of the disclosure;
FIG. 15 illustrates an operation in which an electronic device converts a still image into a video, according to an embodiment of the disclosure;
FIG. 16 illustrates an operation in which an electronic device converts a still image into a video, according to an embodiment of the disclosure;
FIG. 17 illustrates an operation in which an electronic device converts a still image into a video, according to an embodiment of the disclosure;
FIG. 18 illustrates a configuration of an electronic device, according to an embodiment of the disclosure; and
FIG. 19 illustrates a configuration of an electronic device, according to an embodiment of the disclosure.

### MODE FOR THE INVENTION

The terms used herein will be briefly described, and the disclosure will be described in detail.

The terms used herein are general terms currently widely used in the art in consideration of functions in the disclosure, but the terms may vary according to the intention of one of ordinary skill in the art, precedents, or new technology in the art. Also, some of the terms used herein may be arbitrarily chosen by the present applicant, and in this case, these terms are defined in detail below. Accordingly, the specific terms used herein should be defined based on the unique meanings thereof and the whole context of the disclosure.

When a certain part "includes" a certain component, the part does not exclude another component but may further include another component, unless the context clearly dictates otherwise. Also, the term "... unit" or "... module" refers to a unit that performs at least one function or operation, and the unit may be implemented as hardware or software or as a combination of hardware and software. The "unit" and the "module" used in the disclosure refer to a hardware component such as a processor or a circuit, and/or a software component executed by a hardware component such as a processor. The "unit" and the "module" may be implemented by a program that is stored in a storage medium which may be addressed, and is executed by a processor. For example, the "unit" the "module" may be implemented by components such as software components, object-oriented software components, class components, and task components, processes, functions, attributes, procedures, sub-routines, segments of a program code, drivers, firmware, a micro code, a circuit, data, a database, data structures, tables, arrays, and parameters.

Embodiments will now be described more fully with reference to the accompanying drawings for one of ordinary skill in the art to be able to perform the embodiments without any difficulty. However, the disclosure may be embodied in many different forms and is not limited to the embodiments set forth herein. For clarity, portions irrelevant to the descriptions of the disclosure are omitted in the drawings, and like components are denoted by like reference numerals throughout the specification.

In an embodiment of the specification, the term "user" refers to a person who controls a system, a function, or an operation, and may include a developer, a manager, or an installation engineer.

Also, in an embodiment of the specification, an 'image' or a 'picture' may refer to a still image, a moving image including a plurality of consecutive still images (or frames), or a video.

The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. As an additional example, the expression "at least one of a, b, or c" may indicate only a, only b, only c, both a and b, both a and c, both b and c, all of a, b, and c, or variations thereof. Similarly, the term "set" means one or more. Accordingly, the set of items may be a single item or a collection of two or more items.

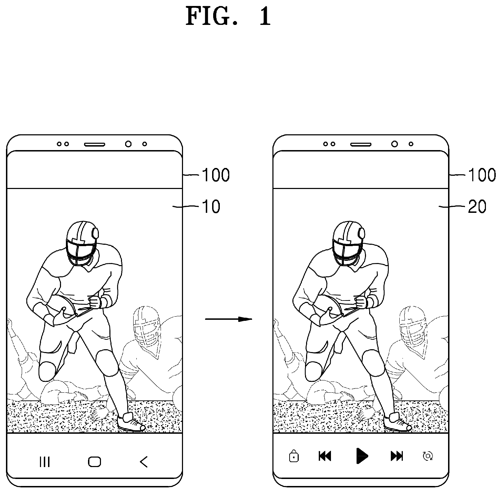

FIG. 1 illustrates an operation in which an electronic device converts a still image into a video, according to an embodiment of the disclosure.

The electronic device according to an embodiment of the disclosure may be implemented as any of various electronic devices such as a mobile phone, a tablet PC, a digital camera, a camcorder, a laptop computer, a desktop, an electronic book reader, a digital broadcasting terminal, a personal digital assistant (PDA), a portable multimedia player (PMP), a navigation device, an MP3 player, a camcorder, an Internet protocol television (IPTV), a digital television (DTV), or a wearable device.

Referring to FIG. 1, an electronic device 100 according to an embodiment of the disclosure may generate a video 20 including a plurality of frame images, by processing a first image 10 by using an image processing module (e.g., an image processing network). In this case, the plurality of frame images included in the video 20 may be images in which details (e.g., structure information such as edges and detailed texture information included in the first image) included in the first image 10 are maintained. Also, the plurality of frame images may be high-quality images that do not include artifacts caused by warping and image qualities of the plurality of frame images are not degraded compared to the first image 10.

The image processing module according to an embodiment of the disclosure may include suitable logic, circuitry, interfaces, and/or code that may enable a still image to be converted into a video. The image processing module may include one or more neural networks. For example, the image processing module may include an encoder that converts an input image into a compressed representation or extracts features of the input image, a decoder that restores the compressed representation to an original resolution, and a U-Net having an encoder-decoder structure. However, the disclosure is not limited to the above examples. The image processing module may include various neural networks.

Hereinafter, the image processing module according to an embodiment of the disclosure will be described in detail with reference to the drawings.

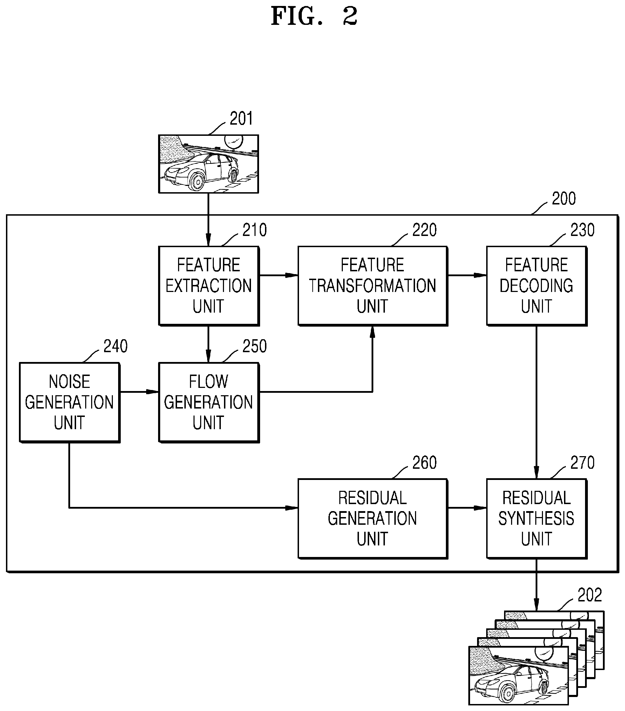

FIG. 2 illustrates a configuration of an image processing module, according to an embodiment of the disclosure.

Referring to FIG. 2, an image processing module 200 according to an embodiment of the disclosure may include a feature extraction unit 210, a feature transformation unit 220, a feature decoding unit 230, a noise generation unit 240, a flow generation unit 250, a residual generation unit 260, and a residual synthesis unit 270. However, the disclosure is not limited to the above examples.

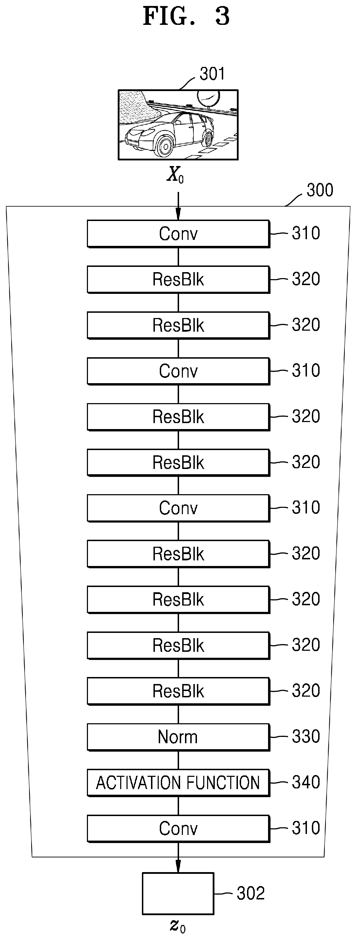

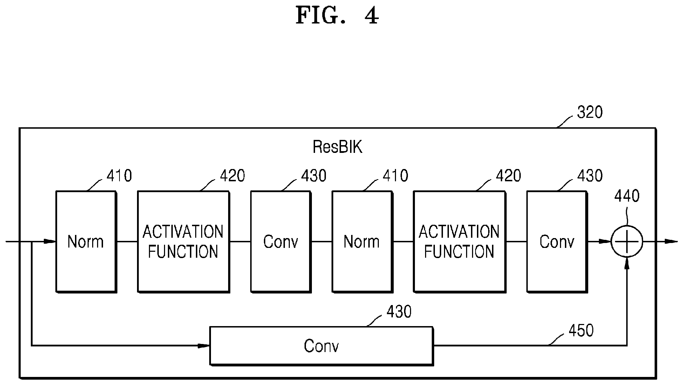

The feature extraction unit 210 may extract feature information from a first image 201 by using an encoder. The encoder is a network for extracting feature information from an image and may include one or more convolutional neural networks (CNN). The feature extraction unit 210 will be described in detail with reference to FIGS. 3 and 4.

The noise generation unit 240 may randomly generate noise images. For example, the noise generation unit 240 may generate noise images following a Gaussian distribution (normal distribution). However, the disclosure is not limited to the above example.

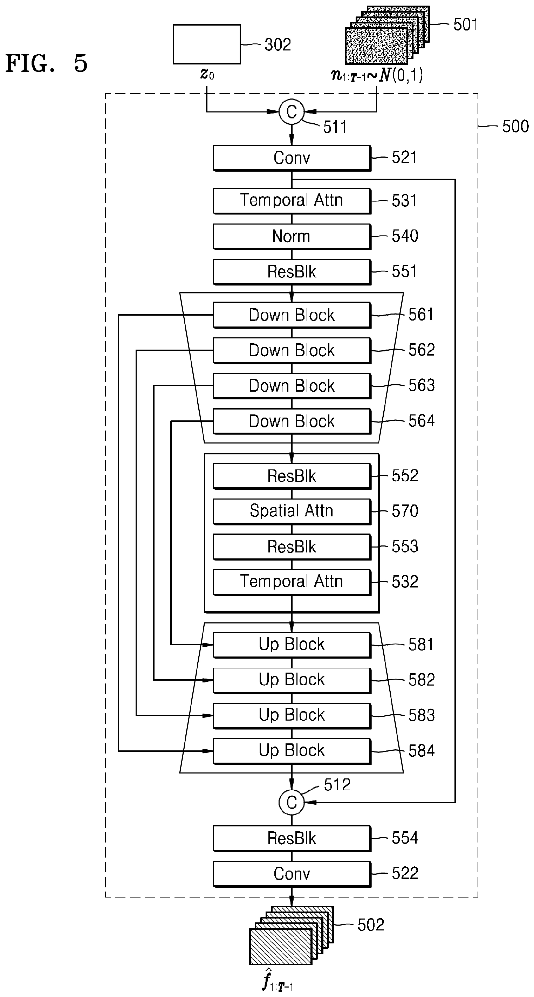

The flow generation unit 250 may generate flow information (flow map) based on the feature information extracted by the feature extraction unit 210 and the noise images generated by the noise generation unit 240, by using a flow generation network. The flow generation network may include a U-Net having an encoder-decoder structure. The flow generation network will be described in detail with reference to FIGS. 5 to 9.

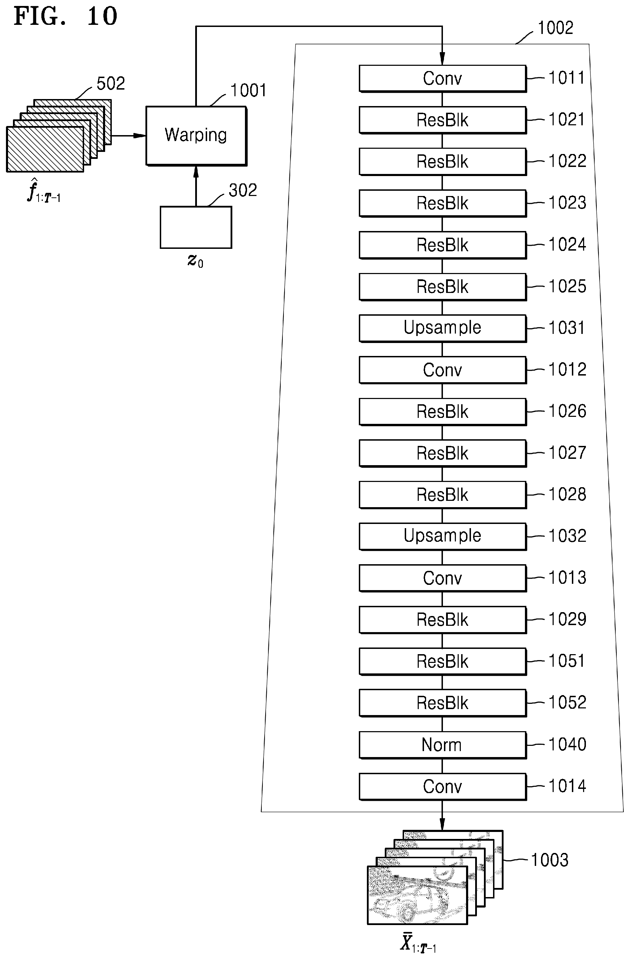

The feature transformation unit 220 may generate transformed feature information, by performing warping by applying the flow information generated by the flow generation unit 250 to the feature information extracted by the feature extraction unit 210. The feature decoding unit 230 may generate transformed images by processing the transformed feature information, by using a decoder. The decoder may restore compressed information (e.g., feature information) to an original resolution. The feature transformation unit 220 and the feature decoding unit 230 will be described in detail with reference to FIG. 10.

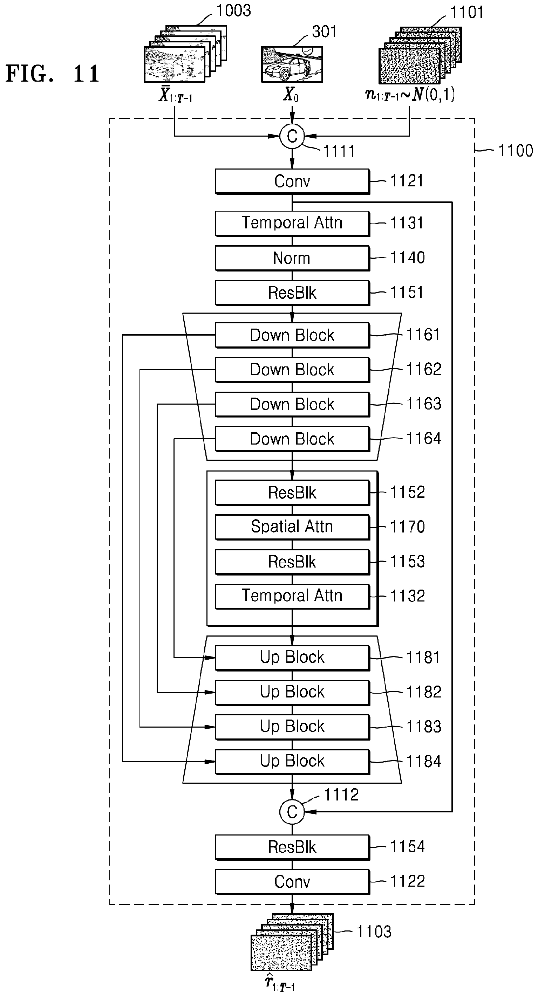

The residual generation unit 260 may generate residual information (residual map) based on the transformed images generated by the feature transformation unit 220, the first image 201, and the noise images generated by the noise generation unit 240, by using a residual generation network. The residual generation network may include a U-Net having an encoder-decoder structure. The residual generation network will be described in detail with reference to FIG. 11.

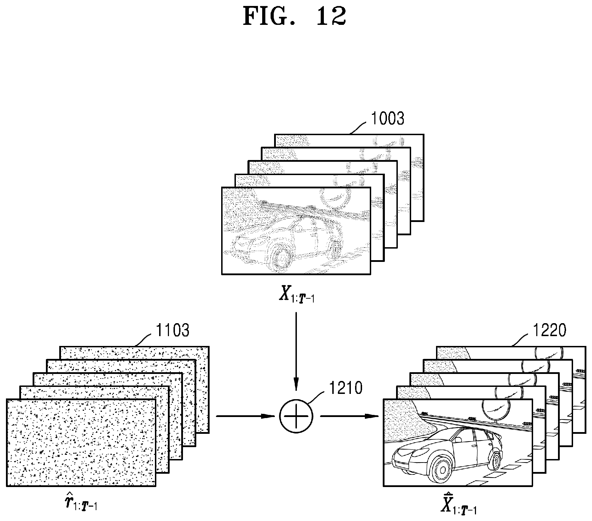

The residual synthesis unit 270 may generate a plurality of frame images 202 by synthesizing the residual information generated by the residual generation unit 260 with the transformed images generated by the feature decoding unit 230. The residual synthesis unit 270 will be described in detail with reference to FIG. 12.

Hereinafter, the feature extraction unit 210, the feature transformation unit 220, the feature decoding unit 230, the noise generation unit 240, the flow generation unit 250, the residual generation unit 260. The residual synthesis unit 270 will be described in detail with reference to the drawings.

FIG. 3 illustrates an encoder included in the feature extraction unit 210, according to an embodiment of the disclosure.

Referring to FIG. 3, the feature extraction unit 210 according to an embodiment of the disclosure may include an encoder 300. The encoder 300 according to an embodiment of the disclosure may extract feature information 302 of a first image 301. The encoder 300 may include one or more convolutional layers 310, one or more residual blocks 320 ("ResBIK" 320 in FIG. 3), a normalization layer 330 ("Norm" 330), and an activation layer 340 ("ACTIVATION FUNCTION" 340).

In the convolutional layer 310 ("Conv" 310) according to an embodiment of the disclosure, a convolution operation may be performed between input data (or input image) input to the convolutional layer 310 and a kernel included in the convolutional layer 310.

The residual block 320 according to an embodiment of the disclosure may include a skip connection that skips one or more layers included in the residual block 320. The residual block will be described in detail with reference to FIG. 4.

FIG. 4 illustrates the residual block 320, according to an embodiment of the disclosure.

Referring to FIG. 4, the residual block 320 ("ResBlk" 320 in FIG. 4) may include one or more normalization layers 410 ("Norm" 410), activation layers 420 ("ACTIVATION FUNCTION" 420), convolutional layers 430 ("Conv" 430), and a summation layer 440. Also, the residual block 320 may include a skip connection 450 that performs a convolution operation on input data input to the residual block 320 and transmits a result to the summation layer 440.

In the normalization layer 410, a range of values of data input to the normalization layer 410 may be adjusted. In the normalization layer 410, batch normalization, layer normalization, instance normalization, group normalization, etc. may be performed.

In the activation layer 420, an activation function operation of applying an activation function to input data input to the activation layer 420 may be performed. The activation function operation is an operation for introducing non-linear characteristics, and examples of the activation function may include a sigmoid function, a Tanh function, a rectified linear unit (ReLU) function, a leaky ReLu function, an exponential linear unit (ELU) function, and a Swish function (sigmoid linear unit (SiLU) function). However, the disclosure is not limited to the above examples.

In the convolutional layer 430, a convolution operation may be performed between input data input to the convolutional layer 430 and a kernel included in the convolutional layer.

In the summation layer 440, an element-wise summation operation of pieces of data input to the summation layer 440 may be performed.

Referring back to FIG. 3, in the normalization layer 330, a range of values of data input to the normalization layer 330 may be adjusted. In the normalization layer 330, batch normalization, layer normalization, instance normalization, group normalization, etc. may be performed.

In the activation layer 340, an activation function operation of applying an activation function to input data (input to the activation layer 340) may be performed. The activation function operation is an operation for introducing non-linear characteristics. Examples of the activation function may include a sigmoid function, a Tanh function, a rectified linear unit (ReLU) function, a leaky ReLu function, an exponential linear unit (ELU) function, and a Swish function (sigmoid linear unit (SiLU) function). However, the disclosure is not limited to the above examples.

The encoder 300 according to an embodiment of the disclosure may output the feature information 302 about the first image 301.

FIG. 5 illustrates a flow generation unit, according to an embodiment of the disclosure.

Referring to FIG. 5, the flow generation unit 250 may include a flow generation network 500. The flow generation network 500 may include a U-Net having an encoder-decoder structure.

The flow generation network 500 may include one or more concatenation layers, one or more convolutional layers, a temporal attention block, a spatial attention block, a normalization layer, one or more residual blocks, down blocks, and up blocks.

Noise information 501 generated by the noise generation unit 240 and the feature information 302 about a first image may be input to the flow generation network 500. The noise information 501 and the feature information 302 about the first image may be input to a first concatenation layer 511.

In the first concatenation layer 511, pieces of data input to the first concatenation layer 511 may be concatenated. For example, data obtained by concatenating the noise information 501 (first input data) and the feature information 302 about the first image (second input data) along a channel direction may be output from the first concatenation layer 511.

In a first convolutional layer 521 ("Conv" 521), a convolution operation may be performed between input data and a kernel included in the first convolutional layer 521.

Data output from the first convolutional layer 521 may be input to a first temporal attention block 531 ("Temporal attn" 531 in FIG. 5) . Also, data output from the first convolutional layer 521 may be input to a second concatenation layer 512 of FIG. 5 described below.

In the first temporal attention block 531, attention may be applied within a time axis for each position of pixels included in input data. Here, attention may refer to a method of finding related features by using similarity between features, aggregating the related features into one, and extracting aggregated feature information.

In the first temporal attention block 531, an attention operation may be performed. An attention operation refers to an operation of obtaining correlation information (e.g., similarity information) between query data "q" and key data "k", obtaining a weight based on the correlation information, reflecting the weight in value data "v" mapped to the key data k, and performing a weighted sum on the value data "v" in which the weight is reflected.

In this case, an attention operation (performed based on query data "q", key data "k", and value data "v" obtained from the same input data) may be referred to as a self-attention operation.

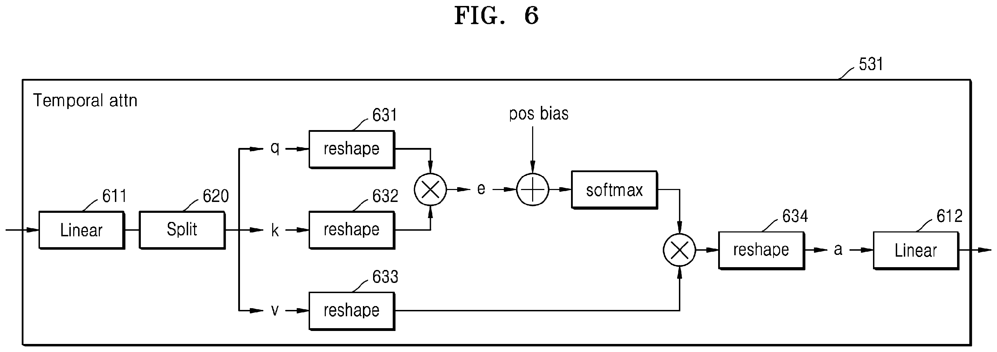

The attention operation performed in the first temporal attention block 531 will be described in detail with reference to FIG. 6.

FIG. 6 illustrates an attention block, according to an embodiment of the disclosure.

Referring to FIG. 6, in the first temporal attention block 531, query data "q", key data "k", and value data "v" may be obtained, based on input data input to the first temporal attention block 531.

For example, in a linear layer 611 ("Linear" 611), linear transformation of data input to the linear layer 611 may be performed. For example, a multiplication operation may be performed between data input to the linear layer 611 and a weight matrix included in the linear layer 611.

Data obtained by performing the multiplication operation with the weight matrix in the linear layer 611 may be input to a split layer 620 ("Split" 620).

The data input to the split layer 620 may be split into a preset number. For example, the data input to the split layer 620 may each be split into query data "q", key data "k", and value data "v".

The query data "q", key data "k", and value data "v" may be respectively input to reshape layers 631, 632, and 633 ("reshape" 631, "reshape" 632, "reshape" 633). In the reshape layers 631, 632, and 633, the input data may be reshaped to a specific dimension.

First correlation data "e" may be obtained through an element-wise multiplication operation between the query data ("q") and key data ("k") reshaped in the reshape layers 631 and 632.

Second correlation data may be obtained by adding a position bias ("pos bias") to the first correlation data.

The first temporal attention block 531 may obtain weight data A by applying a softmax function ("softmax" in FIG. 6) to the second correlation data, and may perform an element-wise multiplication operation between the weight data A and the value data reshaped in the reshape layer 633.

In a reshape layer 634 ("reshape" 634), first output data "a" may be obtained by reshaping data obtained by performing the element-wise multiplication operation.

The first temporal attention block 531 may obtain second output data by performing a multiplication operation between the first output data a and a weight matrix included in a linear layer 612 ("Linear" 612).

Referring back to FIG. 5, data output from the first temporal attention block 531 may be sequentially image-processed in a normalization layer 540 ("Norm" 540) and a first residual block 551 ("ResBlk" 551).

Data output from the first temporal attention block 531 may be input to the normalization layer 540.

In the normalization layer 540, a range of values of data input to the normalization layer 540 may be adjusted. In the normalization layer 540, batch normalization, layer normalization, instance normalization, group normalization, etc. may be performed.

Data output from the normalization layer 540 may be input to the first residual block 551.

In the first residual block 551, operations illustrated and described with reference to FIG. 4 may be performed, and data output from the first residual block 551 may be input to a first down block 561 ("Down Block" 561 in FIG. 5).

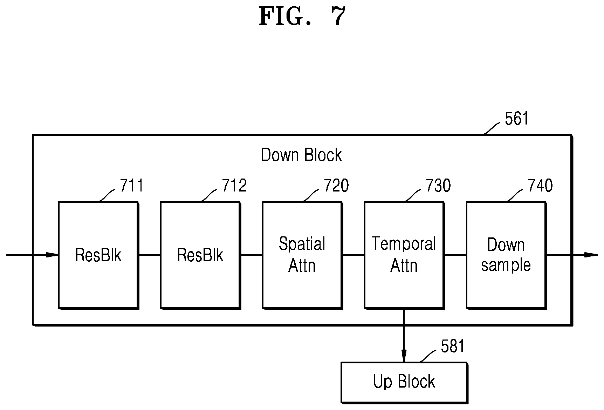

The first down block 561 will be described in detail with reference to FIG. 7.

FIG. 7 illustrates a down block, according to an embodiment of the disclosure.

Referring to FIG. 7, the first down block 561 according to an embodiment of the disclosure may include one or more residual blocks, a spatial attention block, a temporal attention block, and a down sampling layer.

Data input to the first down block 561 according to an embodiment of the disclosure may be sequentially image-processed in two residual blocks 711 ("ResBlk" 711) and 712 ("ResBlk" 712), a spatial attention block 720 ("Spatial Attn" 720), a temporal attention block 730 ("Temporal Attn" 730), and a down sampling layer 740 ("Down sample" 740).

In the two residual blocks 711 and 712, operations illustrated and described with reference to FIG. 4 may be performed. Also, in the temporal attention block 730, operations illustrated and described with reference to FIG. 6 may be performed.

In the spatial attention block 720, attention may be applied within a space axis for each input frame. Here, attention may refer to a method of finding related features by using similarity between features, aggregating the related features into one, and extracting aggregated feature information.

In the spatial attention block 720, an attention operation may be performed. An attention operation refers to an operation of obtaining correlation information (e.g., similarity information) between query data "q" and key data "k", obtaining a weight based on the correlation information, reflecting the weight in value data "v" mapped to the key data k, and performing a weighted sum on the value data "v" in which the weight is reflected.

In this case, an attention operation performed (based on query data "q", key data "k", and value data "v" obtained from the same input data) may be referred to as a self-attention operation.

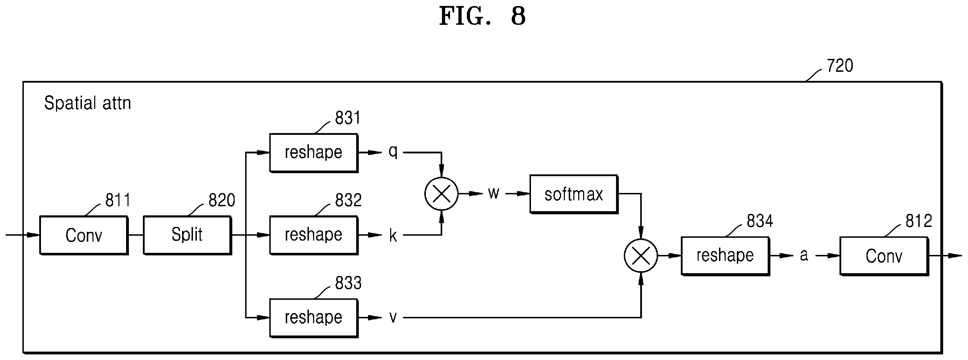

The attention operation performed in the spatial attention block 720 will be described in detail with reference to FIG. 8.

FIG. 8 illustrates a spatial attention block, according to an embodiment of the disclosure.

Referring to FIG. 8, in the spatial attention block 720, query data "q", key data "k", and value data "v" may be obtained based on input data input to the spatial attention block 720.

For example, the input data may be input to a convolutional layer 811 ("Conv" 811). A convolution operation may be performed between the input data input to the convolutional layer 811 and a kernel included in the convolutional layer 811.

Data obtained by performing the convolution operation with the kernel in the convolutional layer 811 may be input to a split layer 820 ("Split" 820).

The data input to the split layer 820 may be split into a preset number. For example, the data input to the split layer 820 may be split into three pieces of data. The three pieces of data split by the split layer 820 may be respectively input to reshape layers 831, 832, and 833 ("reshape" 831, 832, 833). In each of the reshape layers 831, 832, and 833, the input data may be reshaped to a specific dimension.

The data reshaped in the reshape layers 831, 832, and 833 may be query data "q", key data "k", and value data "v".

A weight matrix w may be obtained through an element-wise multiplication operation between the query data "q" and the key data "k".

The spatial attention block 720 may obtain weight data A by applying a softmax function to the weight matrix w, and the spatial attention block 720 may perform an element-wise multiplication operation between the weight data A and the value data "v". Data obtained by performing the element-wise multiplication operation may be input to a reshape layer 834 ("reshape" 834").

In the reshape layer 834, first output data a may be obtained by reshaping the data obtained by performing the element-wise multiplication operation.

The first output data may be input to a convolutional layer 812 ("Conv" 812). The spatial attention block 720 may obtain second output data by performing a convolution operation between the input first output data and a kernel included in the convolutional layer 812, in the convolutional layer 812.

Referring back to FIG. 7, data output from the spatial attention block 720 may be input to the temporal attention block 730.

In the temporal attention block 730, operations illustrated and described with reference to FIG. 6 may be performed. Data processed in the temporal attention block 730 may be input to the down sampling layer 740 and a first up block 581 ("Up Block" 581) of FIG. 5. The first up block 581 of FIG. 5 will be described below in detail.

The down sampling layer 740 may include a convolutional layer. In the down sampling layer, a size (dimension) or a resolution of data input through a convolution operation may be reduced.

Referring back to FIG. 5, data output from the first down block 561 may be input to a second down block 562 ("Down Block" 562) located next to the first down block 561. In the second down block 562, operations illustrated and described with reference to FIG. 7 may be performed. Also, in a third down block 563 ("Down Block" 563) and a fourth down block 564 ("Down Block" 564), operations illustrated and described with reference to FIG. 7 may be performed.

Data output from the fourth down block 564 may be input the second residual block 552 ("ResBlk" 552). In the second residual block 552, operations illustrated and described with reference to FIG. 4 may be performed.

Data output from the second residual block 552 may be input to a spatial attention block 570 ("Spatial Attn" 570). In the spatial attention block 570, operations illustrated and described with reference to FIG. 8 may be performed.

Data output from the spatial attention block 570 may be input to a third residual block 553 ("ResBlk" 553). In the third residual block 553, operations illustrated and described with reference to FIG. 4 may be performed.

Data output from the third residual block 553 may be input to a second temporal attention block 532 ("Temporal Attn" 532). In the second temporal attention block 532, operations illustrated and described with reference to FIG. 6 may be performed.

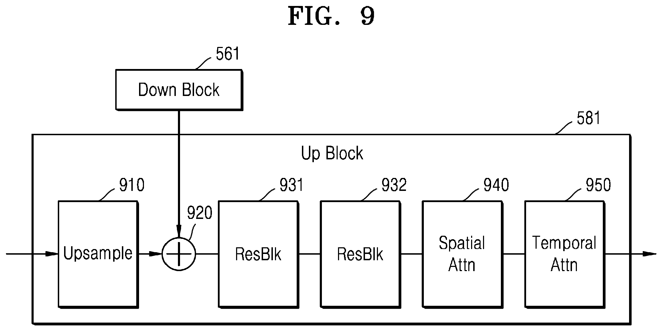

Data output from the second temporal attention block 532 may be input to the first up block 581. The first up block 581 will be described in detail with reference to FIG. 9.

FIG. 9 illustrates an up block, according to an embodiment of the disclosure.

Referring to FIG. 9, the first up block 581 according to an embodiment of the disclosure may include an up sampling layer, a summation layer, one or more residual blocks, a spatial attention block, and a temporal attention block.

Data input to the first up block 581 according to an embodiment of the disclosure may be sequentially image-processed in an up sampling layer 910 ("Upsample" 910, a summation layer 920, two residual blocks (a first residual block 931 ("ResBlk" 931) and a second residual block 932 ("ResBlk" 932)), a spatial attention block 940 ("Spatial Attn" 940), and a temporal attention block 950 ("Temporal Attn" 950).

Data input to the first up block 581 may be input to the up sampling layer 910.

In the up sampling layer 910, a size (dimension) or a resolution of the input data may be increased. For example, in the up sampling layer 910, a resolution that is reduced through down sampling may be restored to an original size or a larger size. In one embodiment, in the up sampling layer 910, detailed information of an image may be restored to improve the quality of the image. In the up sampling layer 910, a size (dimension) or a resolution of input data may be increased through deconvolution operation, nearest neighbor up sampling, bilinear, bicubic interpolation, or pixel shuffling. However, the disclosure is not limited to the above examples.

Data output from the up sampling layer 910 may be input to the summation layer 920. Also, data output from the temporal attention block 730 included in the first down block 561 of FIG. 7 may also be input to the summation layer 920.

In the summation layer 920, an element-wise summation operation of pieces of data input to the summation layer 920 may be performed.

Data output from the summation layer 920 may be input to the first residual block 931. In the first residual block 931, operations illustrated and described with reference to FIG. 4 may be performed, and data output from the first residual block 931 may be input to the second residual block 932. Even in the second residual block 932, operations illustrated and described with reference to FIG. 4 may be performed, and data output from the second residual block 932 may be input to the spatial attention block 940.

In the spatial attention block 940, operations illustrated and described with reference to FIG. 8 may be performed, and data output from the spatial attention block 940 may be input to the temporal attention block 950.

In the temporal attention block 950, operations illustrated and described with reference to FIG. 6 may be performed, and final output data of the first up block 581 may be obtained.

Referring back to FIG. 5, data output from the first up block 581 may be input to a second up block 582 ("Up Block" 582), and in the second up block 582, operations illustrated and described with reference to FIG. 9 may be performed.

Also, even in a third up block 583 ("Up Block" 583) and a fourth up block 584 ("Up Block" 584), operations illustrated and described with reference to FIG. 9 may be performed.

Data output from the fourth up block 584 may be input to the concatenation layer 512.

In the concatenation layer 512, data output from the convolutional layer 521 of FIG. 5 and data output from the fourth up block 584 may be concatenated. For example, data obtained by concatenating data output from the convolutional layer 521 of FIG. 5 and data output from the fourth up block 584 along a channel direction may be output.

Data output from the concatenation layer 512 may be input to a residual block 554 ("ResBlk 554"). In the residual block 554, operations illustrated and described with reference to FIG. 4 may be performed, and data output from the residual block 554 may be input to the convolutional layer 522 ("Conv" 522).

In the convolutional layer 522, a convolution operation may be performed between the input data and a kernel. In the convolutional layer 522, flow information may be obtained.

FIG. 10 illustrates a feature transformation unit and a feature decoding unit, according to an embodiment of the disclosure.

Referring to FIG. 10, the flow information 502 and the feature information 302 extracted by the encoder 300 according to an embodiment of the disclosure may be input to the feature transformation unit 220. The flow information 502 may be generated through the flow generation network 500 illustrated and described with reference to FIG. 5. In an embodiment, the flow information 502 may be generated based on a user input. For example, the flow information may be generated based on flow direction information set by a user. However, the disclosure is not limited to the above examples.

The feature transformation unit 220 according to an embodiment of the disclosure may include a warping module 1001. The warping module 1001 may transform (warp) the feature information by applying the flow information 502 to the feature information 302. The warping module 1001 may obtain transformed feature information.

The transformed feature information may be input to the feature decoding unit 230.

The feature decoding unit 230 according to an embodiment of the disclosure may include a decoder 1002 that may restore the transformed feature information into an original resolution. Accordingly, the decoder 1002 may obtain transformed frame images 1003.

Referring to FIG. 10, the decoder 1002 may include one or more convolutional layers, residual blocks, up sampling layers, and a normalization layer.

The transformed feature information output from the warping module 1001 may be input to a first convolutional layer 1011 ("Conv" 1011) of the decoder 1002. In the first convolutional layer 1011, a convolution operation may be performed between the input data and a kernel.

Data output from the first convolutional layer 1011 may be input to a first residual block 1021 ("ResBlk" 1021). In the first residual block 1021, operations illustrated and described with reference to FIG. 4 may be performed, and data output from the first residual block 1021 may be input to a second residual block 1022 ("ResBlk" 1022). In the second residual block 1022, the third residual block 1023 ("ResBlk" 1023), the fourth residual block 1024 ("ResBlk" 1024), and the fifth residual block 1025 ("ResBlk" 1025), operations illustrated and described with reference to FIG. 4 may be performed, and data output from the fifth residual block 1025 may be input to a first up sampling layer 1031 ("Upsample" 1031).

In the first up sampling layer 1031, an operation of increasing a size (dimension) or a resolution of the input data may be performed. For example, in the first up sampling layer 1031, a deconvolution operation, nearest neighbor up sampling, bilinear, bicubic interpolation, or pixel shuffling may be performed.

Data output from the first up sampling layer 1031 may be input to a second convolutional layer 1012 ("Conv" 1012). In the second convolutional layer 1012, a convolution operation may be performed between the input data and a kernel included in the second convolutional layer 1012.

Data output from the second convolutional layer 1012 may be input to a sixth residual block 1026 ("ResBlk" 1026).

Even in the sixth to eighth residual blocks 1026, 1027, and 1028 ("ResBlk" 1026, 1027, and 1028), operations illustrated and described with reference to FIG. 4 may be performed, and data output from the eighth residual block 1028 may be input to a second up sampling layer 1032 ("Upsample" 1032).

In the second up sampling layer 1032, an operation of increasing a size (dimension) or a resolution of the input data may be performed. For example, in the second up sampling layer 1032, a deconvolution operation, nearest neighbor up sampling, bilinear, bicubic interpolation, or pixel shuffling may be performed.

Data output from the second up sampling layer 1032 may be input to a third convolutional layer 1013 ("Conv" 1013). In the third convolutional layer 1013, a convolution operation may be performed between the input data and a kernel included in the third convolutional layer 1013.

Data output from the third convolutional layer 1013 may be input to a ninth residual block 1029 ("ResBlk" 1029).

Even in the ninth to 11^{th} residual blocks 1029, 1051, and 1052 ("ResBlk" 1029, 1051, and 1052), operations illustrated and described with reference to FIG. 4 may be performed, and data output from the 11^{th} residual block 1052 may be input to a normalization layer 1040 ("Norm" 1040).

In the normalization layer 1040, a range of values of data input to the normalization layer 1040 may be adjusted. In the normalization layer 1040, batch normalization, layer normalization, instance normalization, group normalization, etc. may be performed.

Data output from the normalization layer 1040 may be input to a fourth convolutional layer 1014 ("Conv" 1014). In the fourth convolutional layer 1014, a convolution operation may be performed between the input data and a kernel included in the fourth convolutional layer 1014.

In the fourth convolutional layer 1014, the transformed frame images 1003 may be obtained.

FIG. 11 illustrates a residual generation unit, according to an embodiment of the disclosure.

Referring to FIG. 11, the residual generation unit 260 may include a residual generation network 1100. The residual generation network 1100 may include a U-Net having an encoder-decoder structure.

The residual generation network 1100 may include one or more concatenation layers, one or more convolutional layers, a temporal attention block, a spatial attention block, a normalization layer, a residual block, a down block, and a up sample block.

Noise information 1101 generated in the noise generation unit 240, the first image 301, and the transformed frame images 1003 may be input to the residual generation network 1100. The noise information 1101, the first image 301, and the transformed frame images 1003 may be input to a first concatenation layer 1111.

In the first concatenation layer 1111, pieces of data input to the first concatenation layer 1111 may be concatenated. For example, when the noise information 1101, the first image 301, and the transformed frame images 1003 are input to the first concatenation layer 1111, in the first concatenation layer 1111, input data obtained by concatenating the noise information 1101, the first image 301, and the transformed frame images 1003 along a channel direction may be output.

In a first convolutional layer 1121 ("Conv" 1121), a convolution operation may be performed between input data and a kernel included in the first convolutional layer 1121.

Data output from the first convolutional layer 1121 may be input to a first temporal attention block 1131 ("Temporal Attn" 1131). Also, data output from the first convolutional layer 1121 may be input to a second concatenation layer 1112 of FIG. 11.

In the first temporal attention block 1131, attention may be applied within a time axis for each location of pixels included in input data. Here, attention may refer to a method of finding related features by using similarity between features, aggregating the related features into one, and extracting aggregated feature information.

In the first temporal attention block 1131, operations illustrated and described with reference to FIG. 6 may be performed. Data output from the first temporal attention block 1131 may be input to a normalization layer 1140 ("Norm" 1140).

In the normalization layer 1140, a range of values of data input to the normalization layer 1140 may be adjusted. In the normalization layer 1140, batch normalization, layer normalization, instance normalization, group normalization, etc. may be performed.

Data output from the normalization layer 1140 may be input to a first residual block 1151 ("ResBlk" 1151).

In the first residual block 1151, operations illustrated and described with reference to FIG. 4 may be performed, and data output from the first residual block 1151 may be input to a first down block 1161 ("Down Block" 1161).

In the first down block 1161, operations illustrated and described with reference to FIG. 7 may be performed, and data output from the first down block 1161 may be input to a second down block 1162.

Even in the second to fourth down blocks 1162, 1163, and 1164 ("Down Block" 1162, 1163, 1164), operations illustrated and described with reference to FIG. 7 may be performed.

Data output from the fourth down block 1164 may be input to a second residual block 1152 ("ResBlk" 1152). In the second residual block 1152, operations illustrated and described with reference to FIG. 4 may be performed.

Data output from the second residual block 1152 may be input to a spatial attention block 1170 ("Spatial Attn" 1170). In the spatial attention block 1170, operations illustrated and described with reference to FIG. 8 may be performed.

Data output from the spatial attention block 1170 may be input to a third residual block 1153 ("ResBlk" 1153). In the third residual block 1153, operations illustrated and described with reference to FIG. 4 may be performed.

Data output from the third residual block 1153 may be input to a second temporal attention block 1132 ("Temporal Attn" 1132). In the second temporal attention block 1132, operations illustrated and described with reference to FIG. 6 may be performed.

Data output from the second temporal attention block 1132 may be input to a first up block 1181 ("Up Block" 1181). In the first up block 1181, operations illustrated and described with reference to FIG. 9 may be performed, and data output from the first up block 1181 may be input to a second up block 1182 ("Up Block" 1182).

Even in the second to fourth up blocks 1182, 1183, and 1184 ("Up Block" 1182, 1183, 1184), operations illustrated and described with reference to FIG. 9 may be performed, and data output from the fourth up block 1184 may be input to the second concatenation layer 1112.

In the second concatenation layer 1112, data output from the fourth up block 1184 and data output from the first convolutional layer 1121 may be concatenated along a channel direction and may be output to a fourth residual block 1154 ("ResBlk" 1154).

In the fourth residual block 1154, operations illustrated and described with reference to FIG. 4 may be performed, and data output from the fourth residual block 1154 may be input to a second convolutional layer 1122 ("Conv" 1122).

In the second convolutional layer 1122, a convolution operation may be performed between the input data and a kernel included in the second convolutional layer 1122. In the second convolutional layer 1122, residual information 1103 may be obtained.

FIG. 12 illustrates a residual synthesis unit, according to an embodiment of the disclosure.

Referring to FIG. 12, the residual synthesis unit 270 according to an embodiment of the disclosure may include a summation layer. In a summation layer 1210, an element-wise summation operation of pieces of data input to the summation layer 1210 may be performed. In the summation layer 1210, an element-wise summation operation may be performed between the residual information 1103 generated by the residual generation unit 260 and the transformed frame images 1003 output from the feature decoding unit 230. The summation layer 1210 may obtain a plurality of frame images 1220.

The plurality of frame images 1220 may be images in which details included in the first image 301 (e.g., structural information such as edges and detailed texture information included in the first image) are maintained. Also, the plurality of frame images may be high-quality images that do not include artifacts caused by warping and whose image quality is not degraded compared to the first image 301.

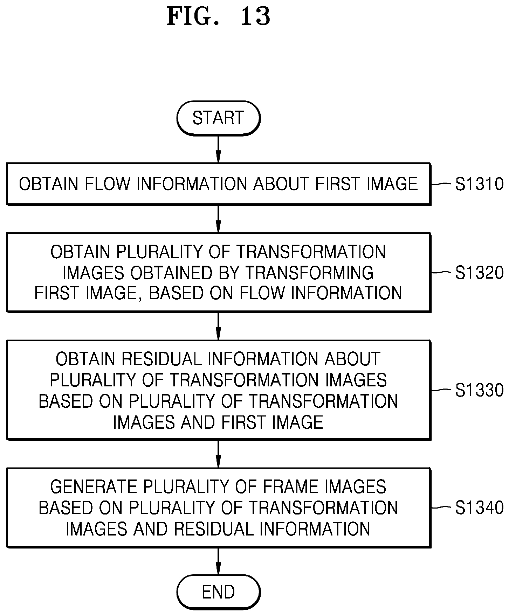

FIG. 13 illustrates an operating method of an electronic device, according to an embodiment of the disclosure.

Referring to FIG. 13, the electronic device 100 according to an embodiment of the disclosure may obtain flow information about a first image (S1310).

For example, the electronic device 100 may obtain flow information about the first image by using the flow generation network 500 illustrated and described with reference to FIG. 5. In this case, noise information generated in a noise generation unit and feature information about the first image may be input to the flow generation network 500.

In one embodiment, the electronic device 100 may generate flow information based on a user input. For example, when a user input that sets a direction of a motion appearing in a video is received, the electronic device 100 may generate flow information so that the motion occurs in the direction.

In one embodiment, based on a user input that selects a specific object in the first image, the electronic device 100 may generate only flow information about the selected object by segmenting the selected object so that a motion occurs only for the selected object. However, the disclosure is not limited to the above examples.

The electronic device 100 according to an embodiment may obtain a plurality of transformation images obtained by transforming the first image, based on the flow information (S1320).

The electronic device 100 may extract feature information of the first image. For example, the electronic device 100 may extract feature information of the first image by using the encoder 300 illustrated and described with reference to FIG. 3.

The electronic device 100 may generate transformed feature information by performing warping by applying the flow information to the extracted feature information.

The electronic device 100 may obtain a plurality of transformation images by decoding the transformed feature information by using the decoder 1002 illustrated and described with reference to FIG. 10.

The electronic device 100 according to an embodiment of the disclosure may obtain residual information about the plurality of transformation images based on the plurality of transformation images and the first image (S1330).

The electronic device 100 may generate residual information about the plurality of transformation images by using the residual generation network 1100 illustrated and described with reference to FIG. 11. In this case, the noise information generated in the noise generation unit, the first image, and the plurality of transformation images may be input to the residual generation network 1100.

The electronic device 100 according to an embodiment of the disclosure may generate a plurality of frame images based on the plurality of transformation images and the residual information (S1340).

The electronic device 100 may generate a plurality of frame images by summing the plurality of transformation images and the residual information.

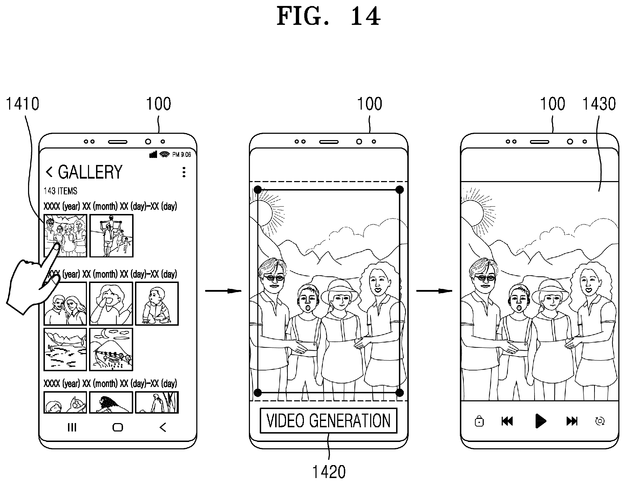

FIG. 14 illustrates an operation in which an electronic device converts a still image into a video, according to an embodiment of the disclosure.

Referring to FIG. 14, the electronic device 100 according to an embodiment of the disclosure may display a plurality of images on a display. For example, the electronic device 100 may execute a photo application based on a user input that requests to execute the photo application. When the photo application is executed, the electronic device 100 may display images pre-stored in the electronic device 100.

When the electronic device 100 receives a user input that selects a first image 1410 from among the plurality of images, the electronic device 100 may enlarge and display the selected first image 1410. The electronic device 100 may select a portion of the first area 1410 or may edit attributes of the first image 1410, based on a user input. Also, the electronic device 100 may convert the first image 1410 into a video 1430, based on a user input that selects a video generation menu 1420. For example, the electronic device 100 may generate a plurality of frame images included in the video 1430 by image-processing the first image 1410 using the image processing module 200 illustrated and described with reference to FIGS. 2 to 12. The electronic device 100 may extract feature information from the first image 1410 using the feature extraction unit 210. The electronic device 100 may generate first noise images using the noise generation unit 240. The electronic device 100 may generate flow information (flow map) based on the first noise images extracted by the feature extraction unit 210 and the first noise images by using the flow generation unit 250. The electronic device 100 may generate transformed feature information by warping by applying the flow information to the extracted feature information by using the feature transformation unit 220. The electronic device 100 may generate transformed images by decoding the transformed feature information using the feature decoding unit 230.

The electronic device 100 may generate second noise images by using the noise generation unit 240. The electronic device 100 may generate residual information (residual map) based on the transformed images, the first image 1410, and the second noise images by using the residual generation unit 260. The electronic device 100 may generate a plurality of frame images by synthesizing the residual information with the transformed images by using the residual synthesis unit 270.

The electronic device 100 may display the video 1430 including the generated plurality of frame images on the display.

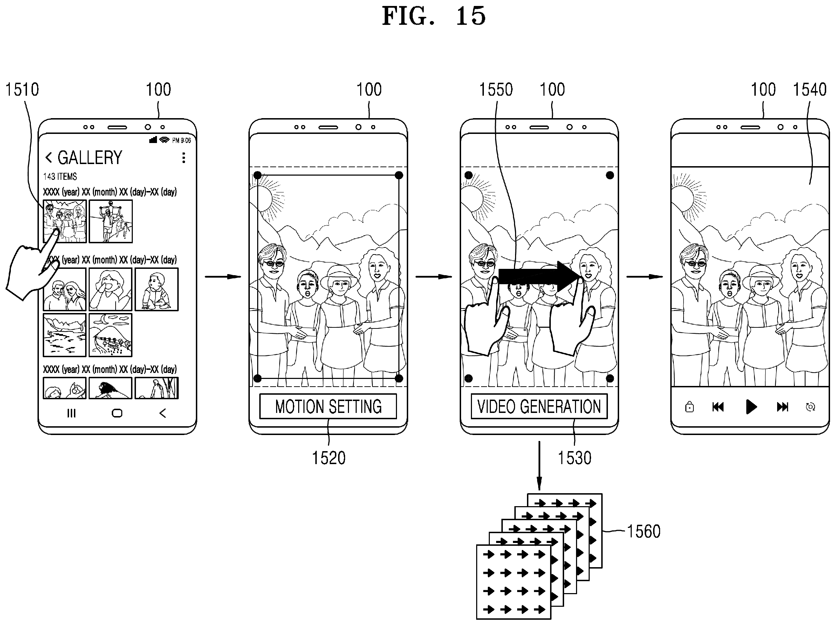

FIG. 15 illustrates an operation in which an electronic device converts a still image into a video, according to an embodiment of the disclosure.

Referring to FIG. 15, the electronic device 100 according to an embodiment of the disclosure may display a plurality of images on a display. For example, the electronic device 100 may execute a photo application based on a user input that requests to execute the photo application. When the photo application is executed, the electronic device 100 may display images pre-stored in the electronic device 100.

When the electronic device 100 receives a user input that selects a first image 1510 from among the plurality of images, the electronic device 100 may enlarge and display the selected first image 1510. The electronic device 100 may select a portion of the first image 1510 or may edit attributes of the first image 1510 based on a user input.

Also, the electronic device 100 may set a motion for the first image 1510 based on a user input that selects a motion setting module 1520. A user may set a direction of the motion by a drag input. For example, the electronic device 100 may receive a touch input that drags from left to right, and may set a direction of a motion to a first direction 1550. When a direction of a motion is set to the first direction 1550, it may mean that a motion in which at least one object included in the first image 1510 moves in the first direction 1550 is set or a motion in which a viewpoint of viewing at least one object included in the first image 1510 moves in the first direction 1550 is set. However, the disclosure is not limited to the above examples.

The electronic device 100 may obtain flow information based on the set direction of the motion. For example, the electronic device 100 may generate flow information indicating the first direction.

In one embodiment, the electronic device 100 may convert the first image 1510 into a video 1540 based on a user input that selects a video generation module 1530. For example, the electronic device 100 may generate a plurality of frame images included in the video 1540 by image-processing the first image 1510 by using the flow information 1560 and the image processing module 200 illustrated and described with reference to FIGS. 2 to 12. The electronic device 100 may extract feature information from the first image 1510 by using the feature extraction unit 210. The electronic device 100 may generate transformed feature information by applying the flow information 1560 generated based on the motion input by the user to the extracted feature information, by using the feature transformation unit 220. For example, the electronic device 100 may use the flow information 1560 indicating the first direction 1550, without generating flow information through a flow generation network. The electronic device 100 obtain transformed feature information by performing warping by applying the flow information 1560 indicating the first direction 1550 to the feature information extracted from the first image 1510. The electronic device 100 may generate transformed images by decoding the transformed feature information by using the feature decoding unit 230.

The electronic device 100 may generate noise images using the noise generation unit 240. The electronic device 100 may generate residual information (residual map) based on the transformed images, the first image 1510, and the noise images using the residual generation unit 260. The electronic device 100 may generate a plurality of frame images by synthesizing the residual information with the transformed images by using the residual synthesis unit 270.

The electronic device 100 may display the video 1540 including the generated plurality of frame images on the display. The generated video 1540 may include a motion in which at least one object included in the first image 1310 moves in the first direction 1550. In one embodiment, the generated video 1540 may include a motion in which a viewpoint of viewing at least one object included in the first image 1510 moves in the first direction 1550. However, the disclosure is not limited to the above examples.

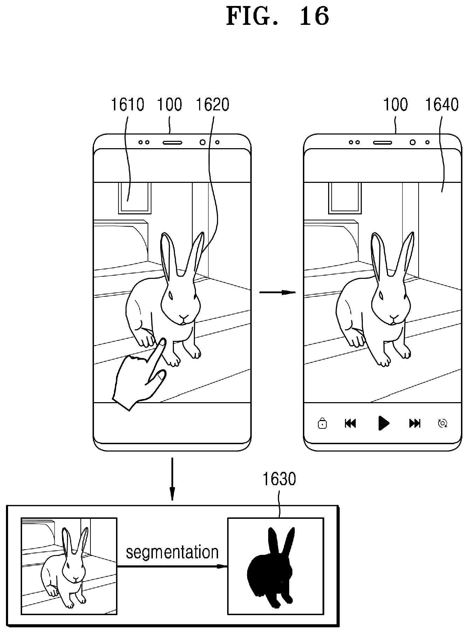

FIG. 16 illustrates an operation in which an electronic device concerts a still image into a video, according to an embodiment of the disclosure.

Referring to FIG. 16, the electronic device 100 according to an embodiment of the disclosure may generate a video in which only a specific object (among objects included in a still image) moves.

For example, the electronic device 100 may display a first image 1610 on a display. The first image 1610 may be an image selected based on a user input. The first image 1610 may include at least one object. The electronic device 100 may receive a user input that selects a first object 1620 from among objects included in the first image 1610.

The electronic device 100 may segment the first object 1620 through object segmentation. Object segmentation may refer to a method of identifying and separating a specific object or a specific area in an image. Object segmentation may be used to identify a boundary of an object in units of pixels in an image, and assign a different color to each object or separate an object from a background. The electronic device 100 may generate a mask 1630 indicating a first object area in the first image 1610 through object segmentation.

The electronic device 100 may convert the first image 1610 into a video 1640 based on a user input that requests to generate a video. The electronic device 100 may generate the video 1640 in which only the first object 1620 moves in the first image 1610. For example, the electronic device 100 may generate a plurality of frame images included in the video 1640 by image-processing the first image 1610 by using the image processing module 200 illustrated and described with reference to FIGS. 2 to 12.

The electronic device 100 may extract feature information from the first image 1610 by using the feature extraction unit 210. The electronic device 100 may generate first noise images by using the noise generation unit 240. The electronic device 100 may generate flow information (flow map) based on the feature information extracted by the feature extraction unit 210 and the first noise images by using the flow generation unit 250. In this case, the electronic device 100 may apply the mask 1630 indicating the first object area to the flow information generated through a flow generation network. The flow information to which the mask 1630 is applied may indicate only flow information of the first object area. The electronic device 100 may generate transformed feature information by performing warping by applying the flow information to which the mask 1630 is applied to the extracted feature information, by using the feature transformation unit 220. The electronic device 100 may generate transformed images by decoding the transformed feature information by using the feature decoding unit 230.

The electronic device 100 may generate second noise images by using the noise generation unit 240. The electronic device 100 may generate residual information (e.g., a residual map) based on the transformed images, the first image 1410, and the second noise images by using the residual generation unit 260. In this case, the electronic device 100 may apply the mask 1630 indicating the first object area to the residual information generated through a residual generation network. The electronic device 100 may generate the video 1640 including the plurality of frame images by synthesizing the residual information to which the mask 1630 is applied with the transformed images by using the residual synthesis unit 270.

Accordingly, the electronic device 100 may generate the video 1640 in which only the first object moves. The electronic device 100 may display the generated video 1640 on the display.

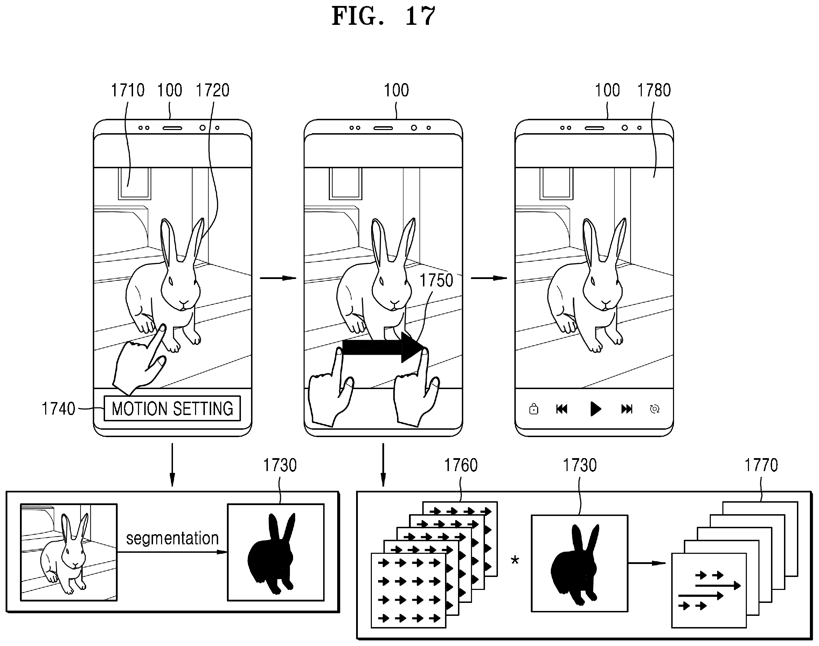

FIG. 17 illustrates an operation in which an electronic device converts a still image into a video, according to an embodiment of the disclosure.

Referring to FIG. 17, the electronic device 100 according to an embodiment of the disclosure may generate a video in which only a specific object among objects included in a still image moves.

For example, the electronic device 100 may display a first image 1710 on a display. The first image 1710 may be an image selected based on a user input. The first image 1710 may include at least one object. The electronic device 100 may receive a user input that selects a first object 1720 from among objects included in the first image 1710.

The electronic device 100 may segment the first object 1720, through object segmentation. The electronic device 100 may generate a mask 1730 indicating a first object area in the first image 1710 through object segmentation.

Also, the electronic device 100 may set a motion for the first object 1720 based on a user input that selects a motion setting menu 1740. A user may set a direction of a motion by a drag input. For example, the electronic device 100 may receive a touch input that drags from left to right, and may set a direction of a motion to a first direction 1750. When a direction of a motion is set, it may mean that a motion in which the first object 1720 moves in the first direction 1750 is set. However, the disclosure is not limited to the above examples.

The electronic device 100 may obtain flow information based on the set direction of the motion. For example, the electronic device 100 may generate flow information 1760 indicating the first direction.

The electronic device 100 may convert the first image 1710 into a video 1780 based on a user input that requests to generate a video. For example, the electronic device 100 may generate a plurality of frame images included in the video 1780 by performing an image-processing operation on the first image 1710 by using the flow information 1560 and the image processing module 200 illustrated and described with reference to FIGS. 2 to 12.

The electronic device 100 may extract feature information from the first image 1710 by using the feature extraction unit 210. The electronic device 100 may generate transformed feature information by applying the flow information 1760 generated based on the motion input by the user to the extracted feature information, by using the feature transformation unit 220. For example, the electronic device 100 may apply the mask 1730 indicating the first object area to the flow information 1760 indicating the first direction 1750, without generating flow information through a flow generation network. Flow information 1760 to which the mask 1730 is applied may indicate only flow information of the first object area.

The electronic device 100 may obtain transformed feature information by performing warping by applying the flow information 1770 to which the mask 1730 is applied to the feature information extracted from the first image 1710, by using the feature transformation unit 220. The electronic device 100 may generate transformed images by decoding the transformed feature information, by using the feature decoding unit 230.

The electronic device 100 may generate noise images by using the noise generation unit 240. The electronic device 100 may generate residual information (residual map) based on the transformed images, the first image 1710, and the noise images by using the residual generation unit 260. In this case, the electronic device 100 may apply the mask 1730 indicating the first object area to the residual information generated through a residual generation network. The electronic device 100 may generate the video 1780 including the plurality of frame images by synthesizing the residual information to which the mask 1730 is applied with the transformed images by using the residual synthesis unit 270.

Accordingly, the electronic device 100 may generate the video 1780 in which only the first object moves in the first direction. The electronic device 100 may display the generated video 1780 on the display.

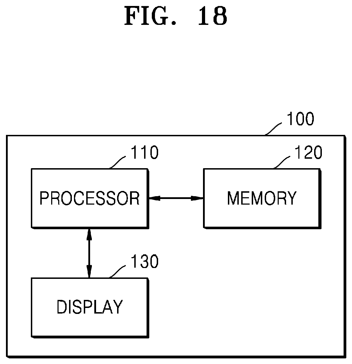

FIG. 18 illustrates a configuration of an electronic device, according to an embodiment of the disclosure.

The electronic device 100 of FIG. 18 may be configured to perform an image processing operation by using the image processing module 200. The image processing module 200 according to an embodiment of the disclosure may include one or more neural networks. For example, the image processing module 200 may include an encoder that is configured to convert an input image into a compressed representation or extracts features of the input image, a decoder that is configured to restore the compressed representation to an original resolution, and a U-Net having an encoder-decoder structure. However, the disclosure is not limited to the above examples. The image processing module 200 may include various neural networks.

Referring to FIG. 18, the electronic device 100 according to an embodiment of the disclosure may include a processor 110, memory 120, and a display 130.

The processor 110 according to an embodiment of the disclosure may control an overall operation of the electronic device 100. The processor 110 according to an embodiment of the disclosure may execute one or more programs stored in the memory 120.

The memory 120 according to an embodiment of the disclosure may store various data, a program, or an application for driving and controlling the electronic device 100. The program stored in the memory 120 may include one or more instructions. The program (the one or more instructions) or the application stored in the memory 120 may be executed by the processor 110.

The processor 110 according to an embodiment of the disclosure may include at least one of a central processing unit (CPU), a graphics processing unit (GPU), or a video processing unit (VPU). According to an embodiment of the disclosure, the processor 110 may be implemented as a system-on-chip (SoC) in which at least one of a CPU, a GPU, or a VPU is integrated. In one embodiment, the processor 110 may further include a neural processing unit (NPU).

The processor 110 according to an embodiment of the disclosure may generate a plurality of frame images (video) by processing a first image by using the image processing module 200 including one or more neural networks. In this case, the plurality of frame images included in the video may be images in which details included in the first image 301 (e.g., structural information such as edges and detailed texture information included in the first image) are maintained. Also, the plurality of frame images may be high-quality images that do not include artifacts caused by warping and whose image quality is not degraded compared to the first image.

The processor 110 according to an embodiment of the disclosure may obtain feature information of the first image. For example, the processor 110 may extract feature information of the first image by using the encoder 300 illustrated and described with reference to FIG. 3. A structure and an operation of the encoder 300 have been described in detail with reference to FIGS. 3 and 4, and thus, a detailed description thereof will be omitted.

The processor 110 according to an embodiment of the disclosure may obtain flow information about the first image. For example, the processor 110 may generate flow information about the first image by using the flow generation network 500 illustrated and described with reference to FIG. 5. A structure and an operation of the flow generation network 500 have been described in detail with reference to FIGS. 5 to 9, and thus, a detailed description thereof will be omitted.

In one embodiment, the processor 110 may generate flow information based on a user input. For example, when a user input that sets a direction of a motion appearing in the video is received, the processor 110 may generate flow information based on the direction of the motion so that in the generated video, the motion occurs in the direction set by the user.

In one embodiment, based on a user input that selects a specific object in the first image, the processor 110 may generate only flow information about the selected object by segmenting the selected object so that a motion occurs only for the selected object. However, the disclosure is not limited to the above example.

The processor 110 according to an embodiment of the disclosure may obtain a plurality of transformation images obtained by transforming the first image, based on the flow information. For example, the processor 110 may generate transformed feature information by performing warping by applying the flow information to the extracted feature information. Also, the processor 110 may obtain a plurality of transformation images by decoding the transformed feature information by using the decoder 1002 illustrated and described with reference to FIG. 10. A structure and an operation of the decoder 1002 have been described in detail with reference to FIG. 10, and thus, a detailed description thereof will be omitted.

The processor 110 according to an embodiment of the disclosure may obtain residual information about the plurality of transformation images based on the plurality of transformation images and the first image. For example, the processor 110 may generate residual information about the plurality of transformation images by using the residual generation network 1100 illustrated and described with reference to FIG. 11. In this case, noise information generated in a noise generation unit, the first image, and the plurality of transformation images may be input to the residual generation network 1100. A structure and an operation of the residual generation network 1100 have been described in detail with reference to FIG. 11, and thus, a detailed description thereof will be omitted.

The processor 110 according to an embodiment of the disclosure may generate a plurality of frame images based on the plurality of transformation images and the residual information. For example, the processor 110 may generate a plurality of frame images by summing the plurality of transformation images and the residual information.

The encoder 300, the flow generation network 500, the decoder 1002, and the residual generation network 1100 according to an embodiment of the disclosure may each be a network trained by a server or an external device. The external device may train the encoder 300, the flow generation network 500, the decoder 1002, and the residual generation network 1100 based on training data.

The server or the external device may determine parameter values used in a plurality of layers and a plurality of blocks included in the encoder 300, the flow generation network 500, the decoder 1002, and the residual generation network 1100.

The electronic device 100 according to an embodiment of the disclosure may receive the encoder 300, the flow generation network 500, the decoder 1002, and the residual generation network 1100 whose training is completed from the server or the external device, and may store the encoder 300, the flow generation network 500, the decoder 1002, and the residual generation network 1100 in the memory 120. For example, the memory 120 may store structures and parameter values of the encoder 300, the flow generation network 500, the decoder 1002, and the residual generation network 1100 according to an embodiment of the disclosure, and the processor 110 may generate a plurality of frame images (video) from the first image according to an embodiment of the disclosure by using the parameter values stored in the memory 120.

The display 130 according to an embodiment of the disclosure generates a driving signal by converting an image signal, a data signal, an OSD signal, and a control signal processed by the processor 110. The display 130 may be implemented as a plasma display panel (PDP), a liquid crystal display (LCD), an organic light-emitting diode (OLED), or a flexible display, or may be implemented as a three-dimensional (3D) display. Also, the display 130 may include a touchscreen, and may be used as an input device in addition to an output device.

The display 130 according to an embodiment of the disclosure may display the generated plurality of frame images (video) by using the image processing module 200.

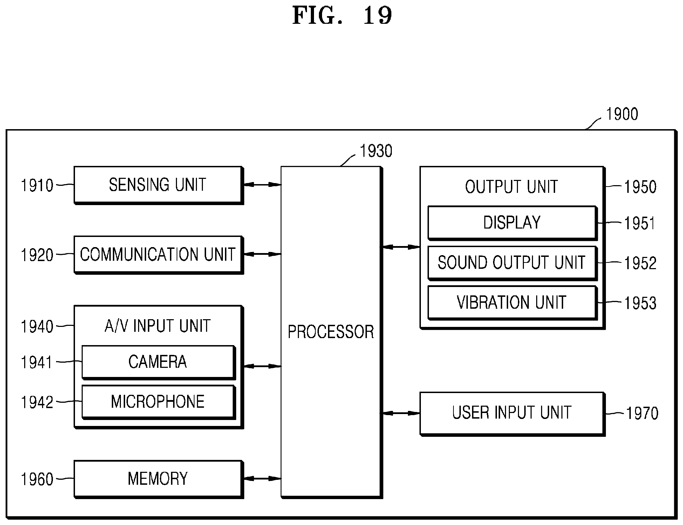

FIG. 19 illustrates a configuration of an electronic device, according to an embodiment of the disclosure.

An electronic device 1900 of FIG. 19 may be an embodiment of the electronic device 100 illustrated and described with reference to FIGS. 1 to 18.

Referring to FIG. 19, the electronic device 1900 according to an embodiment of the disclosure may include a sensing unit 1910, a communication unit 1920, a processor 1930, an A/V input unit 1940, an output unit 1950, memory 1960, and a user input unit 1970.

The processor 1930 of FIG. 19 corresponds to the processor 110 of FIG. 18, the memory 1960 of FIG. 19 corresponds to the memory 130 of FIG. 18, and a display 1951 of FIG. 19 corresponds to the display 130 of FIG. 18, and thus, a repeated description thereof will be omitted.

The sensing unit 1910 may include a sensor that detects a state of the electronic device 1900 or a state around the electronic device 1900. Also, the sensing unit 1910 may transmit information detected by the sensor to the processor 1930.

The communication unit 1920 may include, but is not limited to a short-range wireless communication unit or a mobile communication unit, in response to the performance and structure of the electronic device 1900.

Examples of the short-range communication unit may include, but are not limited to, a Bluetooth communication unit, a Bluetooth low energy (BLE) communication unit, a near-field communication unit, a wireless local area network (WLAN) (Wi-Fi) communication unit, a Zigbee communication unit, an infrared data association (IrDA) communication unit, a Wi-Fi direct (WFD) communication unit, an ultra-wideband (UWB) communication unit, an Ant+ communication unit, and a microwave (uWave) communication unit.

The mobile communication unit transmits and receives a wireless signal to and from at least one of a base station, an external terminal, or a server on a mobile communication network. Here, the wireless signal may include a voice call signal, a video call signal, or various types of data according to text/multimedia message transmission/reception.

The communication unit 1920 according to an embodiment of the disclosure may receive an image from an external device or may transmit an image.

The processor 1930 according to an embodiment of the disclosure may convert a first image into a plurality of frame images (video) by using the image processing module 200 according to an embodiment of the disclosure.

The processor 1930 according to an embodiment of the disclosure may include a single-core, a dual-core, a triple-core, a quad-core, or multiples thereof. Also, the processor 1930 may include a plurality of processors.

The memory 1960 according to an embodiment of the disclosure may include at least one type of storage medium from among a flash memory type, a hard disk type, a multimedia card micro type, a card type memory (e.g., an SD or XD memory), a random-access memory (RAM), a static random-access memory (SRAM), a read-only memory (ROM), an electrically erasable programmable read-only memory (EEPROM), a programmable read-only memory (PROM), a magnetic memory, a magnetic disk, and an optical disk.

The A/V inputter 1940 for inputting an audio signal or a video signal may include a camera 1941 and a microphone 1942. The camera 1941 may obtain image frames such as a still image or a moving image via an image sensor, in a video call mode or an imaging mode. An image captured by the image sensor may be processed by the processor 1930 or a separate image processor.

An image frame processed by the camera 1941 may be stored in the memory 1960 or may be transmitted to the outside through the communication unit 1920. Two or more cameras 1941 may be provided according to a configuration of the electronic device 1900.

The microphone 1942 receives an external sound signal and processes the external sound signal into electrical voice data. For example, the microphone 1942 may receive a sound signal from an external device or a speaker. The microphone 1942 may use various noise removal algorithms for removing noise generated in a process of receiving an external sound signal.

The output unit 1950 for outputting an audio signal, a video signal, or a vibration signal may include the display 1951, a sound output unit 1952, and a vibration motor 1953.

The display 1951 according to an embodiment of the disclosure may display a plurality of frame images (video) generated through the image processing module 200.

The sound output unit 1952 outputs audio data received from the communication unit 1920 or stored in the memory 1960. Also, the sound output unit 1952 outputs a sound signal related to a function (e.g., a call signal reception sound, a message reception sound, or a notification sound) performed by the electronic device 1900. The sound output unit 1952 may include a speaker, a buzzer, etc.

The vibration unit 1953 may output a vibration signal. For example, the vibration unit 1953 may output a vibration signal corresponding to an output of audio data or video data (e.g., a call signal reception sound or a message reception sound). Also, the vibration unit 1953 may output a vibration signal when a touch is input to the touchscreen.

The user input unit 1970 refers to a means by which a user inputs data for controlling the electronic device 1900. Examples of the user input unit 1970 may include, but are not limited to, a key pad, a dome switch, a touch pad (e.g., contact capacitance type, pressure resistive type, infrared (IR) detection type, surface ultrasonic wave conduction type, integral tension measuring type, or piezoelectric effect type), a jog wheel, and a jog switch.

Block diagrams of the electronic devices 100 and 1900 of FIGS. 18 and 19 are block diagrams for an embodiment of the disclosure. Components of the block diagram may be integrated, added, or omitted according to specifications of the electronic devices 100 and 1900 that are actually implemented. That is, when necessary, two or more components may be combined into one component, or one component may be divided into two or more components. Also, a function performed in each block is intended to describe embodiments of the disclosure, and its detailed operations or devices do not limit the scope of the disclosure.

An electronic device according to an embodiment of the disclosure may include memory in which one or more instructions are stored and at least one processor including a processing circuit.

The one or more instructions, when executed by the at least one processor according to an embodiment of the disclosure individually or collectively, cause the electronic device to obtain flow information about a first image.

The one or more instructions, when executed by the at least one processor according to an embodiment of the disclosure individually or collectively, cause the electronic device to obtain a plurality of transformation images obtained by transforming the first image, based on the flow information.

The one or more instructions, when executed by the at least one processor according to an embodiment of the disclosure individually or collectively, cause the electronic device to obtain residual information about the plurality of transformation images based on the plurality of transformation images and the first image.

The one or more instructions, when executed by the at least one processor according to an embodiment of the disclosure individually or collectively, cause the electronic device to generate a plurality of frame images based on the plurality of transformation images and the residual information.

The one or more instructions, when executed by the at least one processor according to an embodiment of the disclosure individually or collectively, cause the electronic device to extract feature information of the first image.

The one or more instructions, when executed by the at least one processor according to an embodiment of the disclosure individually or collectively, cause the electronic device to generate the flow information based on the feature information.

The one or more instructions, when executed by the at least one processor according to an embodiment of the disclosure individually or collectively, cause the electronic device to generate first noise information.

The one or more instructions, when executed by the at least one processor according to an embodiment of the disclosure individually or collectively, cause the electronic device to generate the flow information by performing a first image processing operation on the first noise information and the feature information.

The first image processing operation may be performed by a U-Net network including an encoder and a decoder.

The one or more instructions, when executed by the at least one processor according to an embodiment of the disclosure individually or collectively, cause the electronic device to extract feature information of the first image.

The one or more instructions, when executed by the at least one processor according to an embodiment of the disclosure individually or collectively, cause the electronic device to obtain the plurality of transformation images by warping the feature information based on the flow information.

The one or more instructions, when executed by the at least one processor according to an embodiment of the disclosure individually or collectively, cause the electronic device to generate second noise information.

The one or more instructions, when executed by the at least one processor according to an embodiment of the disclosure individually or collectively, cause the electronic device to generate the residual information by performing a second image processing operation on the second noise information, the plurality of transformation images, and the first image.

The second image processing operation may be performed by a U-Net network including an encoder and a decoder.

The one or more instructions, when executed by the at least one processor according to an embodiment of the disclosure individually or collectively, cause the electronic device to output a video including the plurality of frame images.

The electronic device may further include a display.

The one or more instructions, when executed by the at least one processor according to an embodiment of the disclosure individually or collectively, cause the electronic device to control the display to display a plurality of images.

The one or more instructions, when executed by the at least one processor according to an embodiment of the disclosure individually or collectively, cause the electronic device to receive a first user input that selects the first image from among the plurality of images and a second user input that requests to generate a video for the first image.

The one or more instructions, when executed by the at least one processor according to an embodiment of the disclosure individually or collectively, cause the electronic device to generate the plurality of frame images based on the second user input.

The one or more instructions, when executed by the at least one processor according to an embodiment of the disclosure individually or collectively, cause the electronic device to receive a third user input that sets motion information about the first image.

The one or more instructions, when executed by the at least one processor according to an embodiment of the disclosure individually or collectively, cause the electronic device to generate the flow information based on the third user input.

The one or more instructions, when executed by the at least one processor according to an embodiment of the disclosure individually or collectively, cause the electronic device to receive a fourth user input that selects a first object from among at least one object included in the first image.

The one or more instructions, when executed by the at least one processor according to an embodiment of the disclosure individually or collectively, cause the electronic device to generate the plurality of frame images in which only the first object in the first image moves, based on the fourth user input.

The one or more instructions, when executed by the at least one processor according to an embodiment of the disclosure individually or collectively, cause the electronic device to obtain the plurality of transformation images by applying the flow information only to the first object.

An operating method of an electronic device according to an embodiment of the disclosure may include obtaining flow information about a first image.

The operating method of the electronic device according to an embodiment of the disclosure may include obtaining a plurality of transformation images obtained by transforming the first image, based on the flow information.

The operating method of the electronic device according to an embodiment of the disclosure may include obtaining residual information about the plurality of transformation images based on the plurality of transformation images and the first image.

The operating method of the electronic device according to an embodiment of the disclosure may include generating a plurality of frame images based on the plurality of transformation images and the residual information.

The obtaining of the flow information may include extracting feature information of the first image.

The obtaining of the flow information may include generating the flow information based on the feature information.

The generating of the flow information based on the feature information may include generating first noise information.

The generating of the flow information based on the feature information may include generating the flow information by performing a first image processing operation on the first noise information and the feature information.

The first image processing operation may be performed by a U-Net network including an encoder and a decoder.

The obtaining of the plurality of transformation images may include extracting feature information of the first image.

The obtaining of the plurality of transformation images may include obtaining the plurality of transformation images by warping the feature information based on the flow information.

The obtaining of the residual information may include generating second noise information.

The obtaining of the residual information may include generating the residual information by performing a second image processing operation on the second noise information, the plurality of transformation images, and the first image.

The second image processing operation may be performed by a U-Net network including an encoder and a decoder.

The operating method may further include outputting a video including the plurality of frame images.

The operating method may include displaying a plurality of images.

The operating method may further include receiving a first user input that selects the first image from among the plurality of images and a second user input that requests to generate a video for the first image.

The generating of the plurality of frame images may include generating the plurality of frame images based on the second user input.

The obtaining of the flow information may include receiving a third user input that sets motion information about the first image.

The obtaining of the flow information may include generating the flow information based on the third user input.

The operating method may further include receiving a fourth user input that selects a first object from among at least one object included in the first image.

The obtaining of the flow information may include obtaining flow information about the first object.

The obtaining the plurality of transformation images obtained by transforming the first image based on the flow information may include obtaining the plurality of transformation images by applying the flow information about the first object only to the first object in the first image.

The plurality of frame images may include a plurality of frame images in which only the first object in the first image moves.

An operating method of an electronic device according to an embodiment may be implemented as program commands executable through various computer means and may be recorded on a computer-readable medium. The computer-readable medium may include program commands, data files, data structures, and the like separately or in combinations. The program commands recorded on the computer-readable medium may be specially designed and configured for the disclosure or may be well-known to and be usable by one of ordinary skill in the art of computer software. Examples of the computer-readable recording medium include a magnetic medium such as a hard disk, a floppy disk, or a magnetic tape, an optical medium such as a compact disc read-only memory (CD-ROM) or a digital versatile disc (DVD), a magneto-optical medium such as a floptical disk, and a hardware device specially configured to store and execute program commands such as a ROM, a random-access memory (RAM), or a flash memory. Examples of the program commands include high-level language code that may be executed by a computer by using an interpreter or the like as well as machine language code made by a compiler.

Also, an image processing apparatus and an operating method of an image processing apparatus according to embodiments of the disclosure may be provided in a computer program product. The computer program product may be a product purchasable between a seller and a purchaser.

The computer program product may include a software program and a computer-readable storage medium in which the software program is stored. For example, the computer program product may include a S/W program-type product (e.g., a downloadable application) electronically distributed through a manufacturer of an electronic device or an electronic market (e.g., Google Play^{TM} store or App Store). For electronic distribution, at least a portion of the software program may be stored in a storage medium or temporarily generated. In this case, the storage medium may be a storage medium of a server of the manufacturer, a server of the electronic market, or a relay server that temporarily stores the software program.

The computer program product may include a storage medium of a server or a storage medium of a client device in a system including the server and the client device. In one embodiment, when there is a third device (e.g., a smartphone) communicating with the server or the client device, the computer program product may include a storage medium of the third device. In one embodiment, the computer program product may include a software program itself transmitted from the server to the client device or the third device or from the third device to the client device.

In this case, one of the server, the client device, and the third device may perform a method according to embodiments of the disclosure by executing the computer program product. In one embodiment, at least two of the server, the client device, and the third device may perform a method according to embodiments of the disclosure in a distributed fashion by executing the computer program product.

For example, the server (e.g., a cloud server or an artificial intelligence (AI) server) may execute the computer program product stored in the server, and may control the client device communicating with the server to perform a method according to embodiments of the disclosure.

The scope of the disclosure is not limited to the above embodiments described above. Various modifications and improvements made by one of ordinary skill in the art by using the basic concept of the disclosure defined by the claims are also within the scope of the disclosure.

## Claims

1. An electronic device configured to convert a still image into a video, the electronic device comprising:
memory in which one or more instructions are stored; and
at least one processor,
wherein the one or more instructions, when executed by the at least one processor individually or collectively, cause the electronic device to:
obtain flow information about a first image,
obtain a plurality of transformation images obtained by transforming the first image, based on the flow information about the first image,
obtain residual information about the plurality of transformation images, based on the plurality of transformation images and the first image, and
generate a plurality of frame images, based on the plurality of transformation images and the residual information about the plurality of transformation images.

2. The electronic device of claim 1, wherein the one or more instructions, when executed by the at least one processor individually or collectively, further cause the electronic device to:
extract feature information of the first image, and
generate the flow information about the first image, based on the feature information.

3. The electronic device of claim 2, wherein the one or more instructions, when executed by the at least one processor individually or collectively, further cause the electronic device to:
generate first noise information, and
generate the flow information about the first image by performing a first image processing operation on the first noise information and the feature information,
wherein the first image processing operation is performed by a U-Net network comprising an encoder and a decoder.

4. The electronic device of any one of claims 1 to 3, wherein the one or more instructions, when executed by the at least one processor individually or collectively, further cause the electronic device to:
extract feature information of the first image, and
obtain the plurality of transformation images by warping the feature information based on the flow information about the first image.

5. The electronic device of any one of claims 1 to 4, wherein the one or more instructions, when executed by the at least one processor individually or collectively, further cause the electronic device to:
generate second noise information, and
generate the residual information about the plurality of transformation images by performing a second image processing operation on the second noise information, the plurality of transformation images, and the first image,
wherein the second image processing operation is performed by a U-Net network comprising an encoder and a decoder.

6. The electronic device of any one of claims 1 to 5, wherein the one or more instructions, when executed by the at least one processor individually or collectively, further cause the electronic device to output the video comprising the plurality of frame images.

7. The electronic device of any one of claims 1 to 6, further comprising a display,
wherein the one or more instructions, when executed by the at least one processor individually or collectively, further cause the electronic device to:
control the display to display a plurality of images,
receive a first user input that selects the first image from among the plurality of images and receive a second user input that requests to generate the video for the first image, and
generate the plurality of frame images, based on the second user input.

8. The electronic device of any one of claims 1 to 7, wherein the one or more instructions, when executed by the at least one processor individually or collectively, further cause the electronic device to:
receive a third user input that sets motion information about the first image, and
generate the flow information about the first image, based on the third user input.

9. The electronic device of any one of claims 1 to 8, wherein the one or more instructions, when executed by the at least one processor individually or collectively, further cause the electronic device to:
receive a fourth user input that selects a first object from among at least one object in the first image, and
generate the plurality of frame images in which only the first object moves, based on the fourth user input.

10. The electronic device of claim 9, wherein the one or more instructions, when executed by the at least one processor individually or collectively, further cause the electronic device to obtain the plurality of transformation images by applying the flow information about the first image only to the first object.

11. An operating method performed by an electronic device configured to convert a still image into a video, the operating method comprising:
obtaining flow information about a first image;
obtaining a plurality of transformation images obtained by transforming the first image based on the flow information about the first image;
obtaining residual information about the plurality of transformation images, based on the plurality of transformation images and the first image; and
generating a plurality of frame images, based on the plurality of transformation images and the residual information about the plurality of transformation images.

12. The operating method of claim 11, wherein the obtaining of the flow information about the first image, comprises:
extracting feature information of the first image; and
generating the flow information about the first image, based on the feature information.

13. The operating method of claim 12, wherein the generating of the flow information about the first image based on the feature information, comprises:
generating first noise information; and
generating the flow information about the first image by performing a first image processing operation on the first noise information and the feature information,
wherein the first image processing operation is performed by a U-Net network comprising an encoder and a decoder.

14. The operating method of any one of claims 11 to 13, wherein the obtaining of the plurality of transformation images, comprises:
extracting feature information of the first image; and
obtaining the plurality of transformation images by warping the feature information based on the flow information about the first image.

15. At least one non-transitory computer-readable recording medium storing a program for executing the operating method of any one of claims 11 to 14.
